(19) Europäisches Patentamt
European Patent Office
Office européen des brevets

(11) **EP 2 547 418 B1**

(12) **EUROPÄISCHE PATENTSCHRIFT**

(45) Veröffentlichungstag und Bekanntmachung des Hinweises auf die Patenterteilung:
**29.04.2020  Patentblatt 2020/18**

(21) Anmeldenummer: **11708309.7**

(22) Anmeldetag: **16.03.2011**

(51) Int Cl.:
*B01D 46/00* *(2006.01)*        *B01D 46/52* *(2006.01)*
*B65H 45/20* *(2006.01)*

(86) Internationale Anmeldenummer:
**PCT/EP2011/054003**

(87) Internationale Veröffentlichungsnummer:
**WO 2011/113876 (22.09.2011 Gazette 2011/38)**

(54) **VERFAHREN ZUR HERSTELLUNG EINES ZICKZACKFÖRMIG GEFALTETEN FILTERELEMENTS**

METHOD FOR PRODUCING A FILTER ELEMENT FOLDED IN A ZIGZAG SHAPE

PROCÉDÉ DE FABRICATION D'UN ÉLÉMENT FILTRANT PLISSÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.03.2010  DE 102010011785**

(43) Veröffentlichungstag der Anmeldung:
**23.01.2013  Patentblatt 2013/04**

(73) Patentinhaber: **Mann + Hummel GmbH**
**71636 Ludwigsburg (DE)**

(72) Erfinder:
• **GEHWOLF, Klaus**
**94437 Mamming (DE)**
• **GEIGER, Christian**
**94419 Reisbach (DE)**

(56) Entgegenhaltungen:
**EP-A1- 0 382 330        EP-A1- 0 692 294**
**WO-A1-98/17573        DE-A1- 19 825 636**
**US-A- 5 089 202        US-B1- 6 932 850**

**Beschreibung**

**Technisches Gebiet**

Die Erfindung betrifft ein Verfahren zur Herstellung eines zickzackförmig gefalteten Filterelements insbesondere eines Kraftfahrzeugs aus einem bahnförmigen Filtermedium, bei dem das bahnförmige Filtermedium über eine Zuführeinrichtung einer energieeintragenden Prägeeinheit, nämlich einer Ultraschall-Prägeeinheit zugeführt wird, mit der Knicklinien in das bahnförmige Filtermedium geprägt werden, und das Filtermedium anschließend entlang der Knicklinien mittels einer Falteinrichtung gefaltet wird.

Außerdem betrifft die Erfindung ein Filterelement.

**Stand der Technik**

Aus der WO 98/17573 ist eine Vorrichtung zum Falten eines bahnförmigen Filtermediums bekannt. Das Filtermedium wird von einer Rolle zu einer Prägeeinheit geführt. Die Prägeeinheit besteht aus zwei Ambosswalzen und zwei Sonotroden als Teil eines so genannten Schwinggebildes. Die Sonotroden prägen beim Durchlaufen des Filtermediums dieses an den dafür vorgesehenen Stellen, so dass nachfolgend ein Abknicken erfolgt.

Aus der US 5 089 202 A ist ein Verfahren zur Herstellung eines Filtereinsatzes bekannt, bei dem ein mehrschichtiges Medium, um über seine Lebensdauer eine hinreichende mechanische Stabilität zu gewährleisten, sowohl entlang der Faltlinien als auch in einer Längsrichtung verschweißt wird. Neben einer Verschweißung in zwei Richtungen wird dort vorgeschlagen, die einzelnen Lagen des Filtermediums zu kompaktieren, wodurch eine weiter erhöhte Stabilität erreichbar sein soll. Dort werden zu diesem Zweck zwei beheizte gegenläufige Walzen eingesetzt, die sowohl die Längs- und Quernähte als auch die Kompaktierung erzeugen; man kann daher von einem regionalen Wärmeeintrag sprechen.

Ferner ist aus WO 98/17573 A1 eine Vorrichtung mit einer Prägeeinheit zum Einbringen von Knicklinien bekannt. Die Vorrichtung bzw. das Verfahren sind explizit nicht dazu ausgestattet, mehrere Schichten des Filtermediums miteinander zu verschweißen.

Ferner wird auf die US 6,932,850 B1 verwiesen, die ein sogenanntes "pre-scoring" zum Einbringen der im Wesentlichen parallelen Linie in ein Filtermedium vor dem Faltvorgang beschreibt. Demnach kann es dabei zu einem Schmelzen und/oder Reduzieren der Mediendicke kommen. Zum Verschweißen von mehreren Schichten reicht es aber nicht aus, ein Medium eventuell nur bereichsweise irgendwie zum Schmelzen zu bringen.

Des Weiteren ist der EP 0 382 330 A1 eine Strukturierung eines Filtermediums mittels Walzen zu entnehmen.

Die DE 198 25 636 A1 erwähnt die Möglichkeit, eine Knicklinie mittels einer Ultraschallschweißvorrichtung in ein mehrschichtiges Filtermedium einzubringen. Die verschiedenen Schichten werden dabei mittels der Ultraschallschweißvorrichtung jedoch nicht miteinander verschweißt.

Gemäß EP 0 692 294 A1 wird das Medium in eine Form gepresst und nicht entlang von Kicklinien gefaltet. Die Faltenkanten sind nicht als Schichten, die miteinander verschweißt sind, ausgebildet, sondern das Material nur verdichtet und teilweise einzelne Fasern aufgeschmolzen.

Neuerdings werden auch mehrschichtige bahnförmige Filtermedien verwendet, die zu Filterelementen gefaltet werden. Um zu verhindern, dass sich die Schichten des Filtermediums beim fertigen Filterelement voneinander lösen, werden diese bei bekannten mehrschichtigen Filtermedien vor dem Prägen und Falten in einem separaten Arbeitsgang miteinander verbunden. Die so verbundenen Schichten können aber auch beim Prägeprozess und beim Faltprozess nicht mehr relativ zueinander verschoben werden. Auf diese Weise wird bei mehrschichtigen Filtermedien das Falten erschwert.

Der Erfindung liegt die Aufgabe zugrunde, eine Vorrichtung und ein Verfahren der eingangs genannten Art auszugestalten, mit der/dem mehrschichtige bahnförmige Filtermedien einfach und präzise gefaltet werden können, wobei die Schichten beim fertig gefalteten Filterelement stabil miteinander verbunden sind.

**Offenbarung der Erfindung**

Diese Aufgabe wird erfindungsgemäß mit den Merkmalen des Anspruchs 1 gelöst.

Erfindungsgemäß ist also die energieeintragende Prägeeinheit so ausgestaltet, dass sie gleichzeitig das Filtermedium entlang der Knicklinien prägt und die Schichten dort miteinander verschweißt. Das Filtermedium wird so entlang der Knicklinien dauerhaft insbesondere robust gegenüber Umwelteinflüssen laminiert. Auf diese Weise wird die Stabilität des Filtermediums im gefalteten Zustand erhöht. Außerdem wird durch die definierte und stabile Verbindung der Schichten entlang der Knicklinien das anschließende Falten erleichtert und verbessert. Die Schichten werden derart miteinander verschweißt, dass die Verbundfestigkeit an den Verbindungs- bzw. Schweißlinien der Schichten mindestens so groß ist, wie die Materialfestigkeit innerhalb der einzelnen Schichten.

Erfindungsgemäß wird als energieeintragende Prägeeinheit eine Ultraschall-Prägeeinheit verwendet.

Erfindungsgemäß ist vorgesehen, dass die Schichten des mehrschichtigen Filtermediums vor dem Prägen nicht miteinander verbunden sind. Auf einen vorhergehenden Arbeitsgang zum Verbinden, insbesondere Laminieren, der Schichten kann so verzichtet werden. Die Schichten liegen bis zum Prägeprozess entspannt flächig aneinander und sind relativ zueinander verschiebbar. Spannungen zwischen den Schichten, die beim Prägen und beim Falten auftreten können, werden so einfach ausgeglichen. Dadurch werden der Prägevorgang und der Faltvorgang vereinfacht.

Bei einer weiteren vorteilhaften Ausführungsform kann der Ultraschall-Prägeeinheit eine Aufstelleinheit nachgeordnet sein zur zickzackförmigen Faltung des bahnförmigen Filtermediums. Das Filtermedium kann mit der Aufstelleinheit direkt im Anschluss an das Prägen und Verschweißen gefaltet werden. So können die Schichten sich einfach nach jeder Prägung einer Knicklinie zueinander ausrichten, um Spannungen abzubauen, was den Faltprozess weiter vereinfacht und die Präzision erhöht.

Erfindungsgemäß weist wenigstens eine der Schichten des mehrschichtigen Filtermediums ein Kunststoffgitter auf. Gitter erhöhen die Stabilität des Filtermediums. Kunststoff kann mit der Ultraschall-Prägeeinheit einfach erwärmt, geprägt und mit den restlichen Schichten verschweißt werden.

Ferner ist vorgesehen, dass wenigstens eine der Schichten des mehrschichtigen Filtermediums eine Meltblownlage aufweist. Durch die dreidimensionale Speicherstruktur der Meltblownlage wird eine sehr gute Filtrationsleistung erreicht, was die Standzeiten des Filterelements erhöht. Meltblownlagen können einfach geformt, geprägt und verschweißt werden.

In einer Ausführungsform sind bei dem Filtermedium in Durchströmungsrichtung eine Vorfilterlage und eine Feinfilterlage aneinandergefügt, wobei auf der Rohseite der Vorfilterlage eine erste Stützlage und auf der Reinseite der Feinfilterlage eine zweite Stützlage zur Aufnahme der Längs- bzw. Querkräfte bei Zug- oder Druckbeanspruchung aufgebracht ist, wobei die beiden Stützlagen jeweils unterschiedliche durchschnittliche maximale Zugkräfte in Längs- bzw. Querrichtung aufweisen. Als Längsrichtung ist dabei die Richtung definiert, in welcher das insbesondere bahnförmige und vorzugsweise rechteckige Filtermedium seine größte Länge aufweist, insbesondere die Vorschubrichtung bei der Herstellung des Filtermediums. Als Querrichtung ist die Richtung definiert, welche entlang der Breite des Filtermediums, senkrecht zur Längsrichtung verläuft und entlang welcher das Filtermedium vorzugsweise gefaltet wird.

Die unterschiedlichen Festigkeiten haben den Vorteil, dass durch diese in Längs- und Querrichtung der Längenunterschied der äußeren Lagen um die neutrale Lage in der Mitte bei evtl. Umlenkungen beim Laminations-, Rollenschneide-, Präge- und Aufstellprozess ausgeglichen wird und somit die Verarbeitbarkeit verbessert oder in bestimmten Medienkonfigurationen erst sicher gestellt wird. Die für die Verbindung von Faltenbalg und Endscheibe des Filterelements notwendige Steifigkeit, die beim Verschweißen des Filtermediums mit einer thermoplastischen Endscheibe oder beim Eintauchen des Filtermediums in einen zähflüssigen Klebstoff erforderlich ist, wird vorteilhaft mittels der Stützlage zur Aufnahme der Querkräfte erreicht.

Des Weiteren können die Stützlagen in entsprechenden Ausführungsformen vorteilhaft die Funktion der Drainage zur Verhinderung der Paketierung des Filtermediums erfüllen. Ein weiterer Vorteil der Stützlagen besteht dabei in der Möglichkeit, die Falten "auf Block" fahren zu können, da aufgrund der dadurch aneinander liegenden Stützlagen der Durchfluss gewährleistet ist.

Bei Messungen zur Bestimmung von Eigenschaften bei Zugbeanspruchung wird im Allgemeinen, jeweils getrennt für die Maschinenlaufrichtung (Längsrichtung) und die Querrichtung die breitenbezogene Bruchkraft nach DIN EN ISO 1924-2 über die folgende Gleichung bestimmt:

$$\sigma_T^b = \frac{\bar{F}_t}{b}$$

wobei $\bar{F}_t$ den Mittelwert der maximalen Zugkraft in Newton und b die Anfangsbreite der Probe in Millimeter bezeichnet. Normgemäß beträgt b=15 mm und die Länge der Probe mindestens 180 mm. Zur Bestimmung der mittleren maximalen Zugkraft sind mindestens 10 Zugversuche erforderlich. Im Folgenden wird als Materialkennwert der Mittelwert der maximalen Zugkraft in Newton $\bar{F}_t$ angegeben. Da normgemäß die Breite b von 15 mm als feste Versuchsgröße definiert wird, kann daraus jederzeit die breitenbezogene Bruchkraft errechnet werden.

Als weiterer Materialkennwert wird im Folgenden die breitenbezogene Biegesteifigkeit S bestimmt nach DIN 53121 verwendet. Die Norm sieht verschiedene Messverfahren vor, vorzugsweise wird eine rechteckige Probe mit der Breite b entlang einer Breite eingespannt und im Abstand I von der Einspannung mit einer Kraft F belastet, wodurch sich eine maximale Durchbiegung f als Verschiebung des Kraftangriffspunktes ergibt. Die breitenbezogene Biegesteifigkeit S errechnet sich daraus zu

$$S = \frac{F}{f} * \frac{l^3}{3\,b}.$$

In einer Ausführungsform beträgt die durchschnittliche maximale Zugkraft der die Querkräfte aufnehmenden Stützlage des Filtermediums in Längsrichtung größer 10 N.

In einer vorteilhaften Ausführungsform beträgt die durchschnittliche maximale Zugkraft der die Querkräfte aufnehmenden Stützlage des Filtermediums in Querrichtung größer 20 N.

In einer Ausführungsform beträgt die durchschnittliche maximale Zugkraft der die Längskräfte aufnehmenden Stützlage des Filtermediums in Längsrichtung größer 20 N.

In einer vorteilhaften Ausführungsform beträgt die durchschnittliche maximale Zugkraft der die Längskräfte aufnehmenden Stützlage des Filtermediums in Querrichtung größer 10 N.

In einer Ausführungsform beträgt die breitenbezogene Biegesteifigkeit der die Querkräfte aufnehmenden Stützlage des Filtermediums in Längsrichtung größer 0,1 N · mm, insbesondere größer 0,15 N · mm.

In einer Ausführungsform beträgt die breitenbezogene Biegesteifigkeit der die Querkräfte aufnehmenden Stützlage des Filtermediums in Querrichtung größer 0,3 N · mm, insbesondere größer 0,4 N · mm.

In einer vorteilhaften Ausführungsform beträgt die breitenbezogene Biegesteifigkeit der die Längskräfte aufnehmenden Stützlage des Filtermediums in Längsrichtung größer 0,3 N · mm, besonders bevorzugt größer 0,45 N · mm.

In einer Ausführungsform beträgt die breitenbezogene Biegesteifigkeit der die Längskräfte aufnehmenden Stützlage des Filtermediums in Querrichtung größer 0,1 N · mm, besonders bevorzugt größer 0,15 N · mm.

In einer Ausführungsform sind die Stützlagen jeweils in Form eines Gitters ausgebildet, welches sich kreuzenden Fäden aufweist, wobei die kreuzenden Fäden einen Fadenwinkel aufspannen.

In einer Ausführungsform liegt der Fadenwinkel der für die Aufnahme der Querkräfte zuständigen Stützlage des Filtermediums im Bereich von 70° - 120°, bevorzugt im Bereich von 80° - 100°, besonders bevorzugt bei 90°.

In einer Ausführungsform liegt der Fadenwinkel der für die Aufnahme der Längskräfte zuständigen Stützlage des Filtermediums im Bereich von 40° - 80°, insbesondere im Bereich von 50° - 70°.

In einer Ausführungsform wird die Vorfilterlage des Filtermediums aus einer Meltblownlage mit einer Dicke im Bereich von 0,1 mm bis 1 mm und einem Flächengewicht im Bereich von 40 g/m² - 200 g/m² gebildet.

In einer Ausführungsform beträgt die Dicke der Meltblownlage des Filtermediums zwischen 0,2 mm und 0,4 mm und das Flächengewicht zwischen 90 g/m² und 110 g/m².

In einer Ausführungsform liegt der Faserdurchmesser der Vorfilterlage und/oder der Feinfilterlage des Filtermediums im Bereich von 0,1 $\mu$m bis 10 $\mu$m.

In einer Ausführungsform sind die die Vorfilterlage und/oder die Feinfilterlage des Filtermediums hergestellt aus Materialien ausgewählt aus der Gruppe bestehend aus Polybutylterephthal(PBT)-Meltblown, Polyamid(PA)-Meltblown, Polypropylen(PP)-Meltblown und Polyethersulfon(PES)-Meltblown.

In einer Ausführungsform wird die Feinfilterlage des Filtermediums aus einer Meltblownlage mit einer Dicke im Bereich von 0,5 mm bis 1,5 mm und einem Flächengewicht im Bereich von 40 - 200 gebildet.

In einer Ausführungsform beträgt die Dicke der Meltblownlage des Filtermediums zwischen 0,6 mm und 1,0 mm und das Flächengewicht zwischen 90 und 110 g/m².

In einer Ausführungsform weist das Filtermedium zusätzlich eine dritte Filterlage auf.

In einer Ausführungsform wird die dritte Filterlage des Filtermediums aus einer Meltblownlage mit einer Dicke im Bereich von 0,1 mm bis 1 mm und einem Flächengewicht im Bereich von 10 - 100 gebildet.

In einer Ausführungsform beträgt die Dicke der Meltblownlage des Filtermediums zwischen 0,2 mm und 0,4 mm und das Flächengewicht zwischen 30 und 60 g/m².

In einer Ausführungsform ist die dritte Filterlage des Filtermediums hergestellt aus Materialien ausgewählt aus der Gruppe bestehend aus Polybutylterephthal(PBT)-Meltblown, Polyamid(PA)-Meltblown, Polypropylen(PP)-Meltblown und Polyethersulfon(PES)-Meltblown.

In einer Ausführungsform liegt der Faserdurchmesser der dritten Filterlage des Filtermediums im Bereich von 0,1 $\mu$m bis 10 $\mu$m.

In einer Ausführungsform ist die dritte Filterlage als Absolutabscheider ausgebildet.

In einer Ausführungsform bestehen die Stützlagen aus einer Kombination, ausgewählt aus der Gruppe bestehend aus Gitter-Spunbond, Spunbond-Spunbond, Spunbond-Filterlagen und Gitter-Filterlagen.

Bei einer weiteren vorteilhaften Ausführungsform kann die Ultraschall-Prägeeinheit eine Ambosswalze mit Prägestegen, eine ultraschallbetriebene Sonotrode und einen Prägestempel, der insbesondere von der Sonotrode zumindest mit gebildet ist, aufweisen. Auf diese Weise kann einfach in einem kontinuierlichen Verfahren das bahnförmige Filtermedium in einem Arbeitsschritt entlang der Knicklinien geprägt und verschweißt werden.

Vorteilhafterweise kann in Transportrichtung des Filtermediums vor und hinter der Ambosswalze jeweils eine insbesondere angetriebene Nippwalze angeordnet sein. Die Positionen der Nippwalzen relativ zur Ambosswalze sind veränderbar, um einen Einlaufwinkel und einen Auslaufwinkel über die Ambosswalze einzustellen. Angetriebene Nippwalzen können ferner dem Transport der Filtermediumbahnen dienen. Vorteilhafterweise kann die Geschwindigkeit der Nippwalzen eingestellt werden. Die Nippwalzen können in Position und/oder Geschwindigkeit an die Eigenschaften der Filtermediumbahn, insbesondere Materialzusammensetzung, Schichtdicken und/oder Abmessungen, angepasst werden, um eine optimale Prägung und Verschweißung zu ermöglichen.

Die Aufgabe wird erfindungsgemäß ferner verfahrenstechnisch dadurch gelöst, dass Schichten des mehrschichtigen Filtermediums beim Prägen entlang der Knicklinien verschweißt werden. Die oben in Verbindung mit der erfindungsgemäßen Vorrichtung aufgezählten Vorteile gelten für das Verfahren und dessen vorteilhafte Ausgestaltungen entsprechend.

Das Filtermedium wird mittels einer Ambosswalze mit Prägestegen, einer ultraschall betriebenen Sonotrode und einem Prägestempel, der insbesondere von der Sonotrode zumindest mit gebildet ist, geprägt und verschweißt.

Vorteilhafterweise kann das mehrschichtige Filtermedium nach dem Prägen und Verschweißen mit einer Aufstelleinheit zickzackförmig gefaltet werden.

**Kurze Beschreibung der Zeichnungen**

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen

Figur 1    schematische Darstellung einer Vorrichtung zum zickzackförmigen Falten einer dreischichtigen Filtermediumbahn;

Figur 2    schematisch eine Detailansicht einer Ultraschall-Prägeeinheit der Vorrichtung aus der Figur 1;

Figur 3    schematisch eine Detailansicht der mit der Ultraschall-Prägeeinheit aus der Figur 2 geprägten und verschweißten Filtermediumbahn;

Figur 4    eine isometrische Darstellung eines mit der Vorrichtung aus der Figur 1 hergestellten zickzackförmig gefalteten Filterelements;

Figur 5    eine Detailansicht des Filterelements aus der Figur 4;

Figur 6    schematisch eine Vorrichtung zum zickzackförmigen Falten der dreischichtigen Filtermediumbahn, welche zu der Vorrichtung aus der Figur 1 ähnlich ist.

In den Figuren sind gleiche Bauteile mit gleichen Bezugszeichen versehen.

**Ausführungsform(en) der Erfindung**

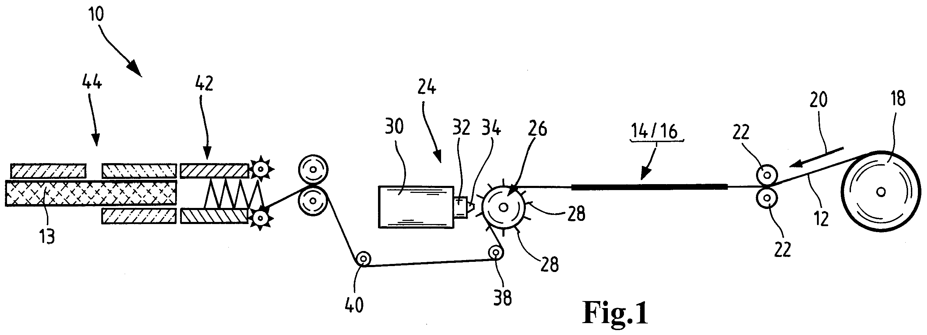

In der Figur 1 ist eine Vorrichtung 10 zum zickzackförmigen Falten einer mehrschichtigen Filtermediumbahn 12 eines Filterelements 13 gezeigt.

Das Filterelement 13 wird verwendet zur Filtrierung von flüssigen oder gasförmigen Fluiden, beispielsweise Motoröl, Kraftstoff, Verbrennungsluft oder Druckluft, in Kraftfahrzeugen.

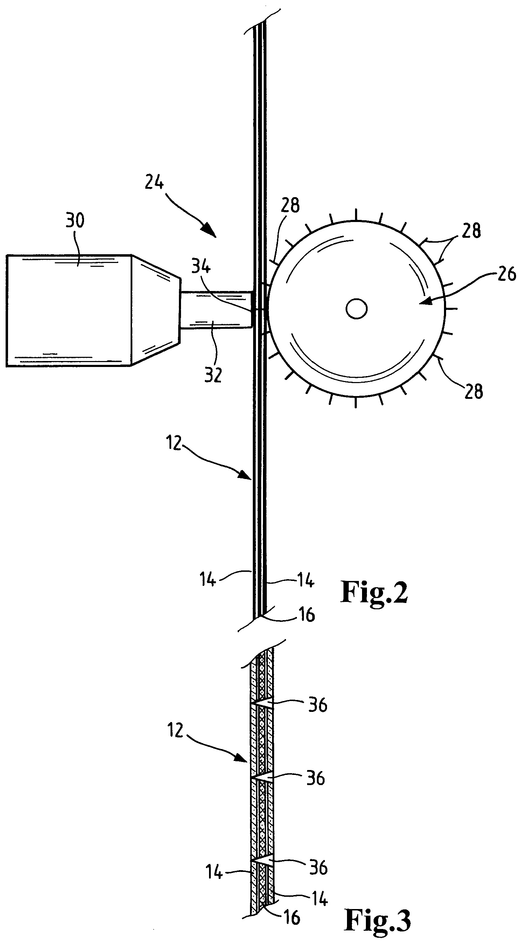

Die Filtermediumbahn 12 besteht, wie in den Figuren 2 und 3 gezeigt, aus drei Schichten, die zunächst lose aneinander liegen. Die beiden äußeren Schichten bestehen aus Kunststoffgittern 14. Zwischen den Kunststoffgittern 14 ist eine Meltblownlage 16 angeordnet, die die mittlere Schicht bildet. Alternative Ausführungsformen sehen zwei oder mehr Schichten vor.

Die endlose Filtermediumbahn 12 wird von einer Rolle 18 in Förderrichtung, angedeutet durch einen Pfeil 20, abgerollt und zwischen zwei Transportrollen 22 hindurchgeführt. Die Filtermediumbahn 12 wird, ohne dass sie vorher eigens erwärmt wird, einer Ultraschall-Prägeeinheit 24 zugeführt.

Die Ultraschall-Prägeeinheit 24 verfügt über eine Ambosswalze 26, welche umfangsseitig mit einer Vielzahl von Prägestegen 28 ausgestattet ist. Die Prägestege 28 sind in gleichmäßigen oder ungleichmäßigen Abständen entlang des Umfangs der Ambosswalze 26 verteilt angeordnet. Sie erstrecken sich jeweils axial zur Ambosswalze 26, in radialer Richtung. Die Ausdehnung der Prägestege 28 in Umfangsrichtung beträgt jeweils etwa 1 mm. Die radial äußeren Oberflächen der Prägestege 28 sind glatt. Durch ungleichmäßige Abstände der Prägestege 28 sind sich ändernde Faltenhöhen realisierbar.

Ferner weist die Ultraschall-Prägeeinheit 24 eine Ultraschalleinheit 30 auf, mit der Ultraschall in hier nicht weiter interessierender Weise in eine Sonotrode 32 eingeleitet wird. Die Ultraschalleinheit 30 mit der Sonotrode 32 befindet sich neben der Ambosswalze 26. Die Sonotrode 32 bildet einen Prägestempel, welcher mit dem Prägestegen 28 der Ambosswalze 26 zusammenwirkt.

Die Filtermediumbahn 12 wird zwischen der Ambosswalze 26 und der Sonotrode 32 hindurch bewegt. In Transportrichtung 20 vor der Ambosswalze 26 können sich die Kunststoffgitter 14 und die Meltblownlage 16 relativ zueinander verschieben. Auf diese Weise werden mechanische Spannungen zwischen den Schichten abgebaut.

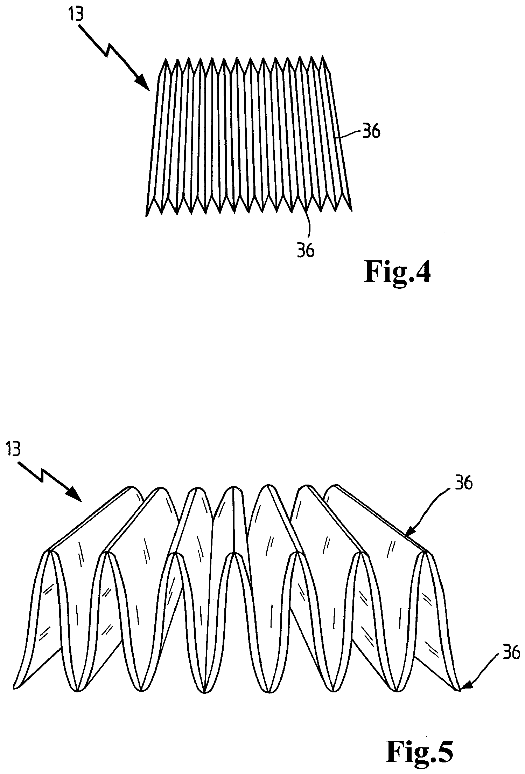

Während des Transports der Filtermediumbahn 12 durch die Ultraschall-Prägeeinheit 24 führt die Einleitung von Ultraschall an einer Spitze 34 der Sonotrode 32 zum Erwärmen der Filtermediumbahn 12 in den durch die Prägestege 28 definierten Bereichen. Die so geprägten Bereiche bilden Knicklinien 36 für das anschließende Falten der Filtermediumbahn 12. Die Knicklinien 36 sind in der Figur 3 im Detail und bei einem fertigen Filterelement 13 in den Figuren 4 und 5 gezeigt.

Die Höhen der Prägestege 28 in radialer Richtung, der Abstand zwischen der Spitze 34 der Sonotrode 32 und den Prägestegen 28 und die mittels der Sonotrode 32 auf die Filtermediumbahn 12 abgegebene Energie sind auf die Eigenschaften der Filtermediumbahn 12, beispielsweise die Materialart, die Schichtdicken und die Gesamtdicke abgestimmt, um gleichzeitig mit dem Prägevorgang die Kunststoffgitter 14 und die Meltblownlage 16 mit der Sonotrode 32 entlang der Knicklinie 36 zu verschweißen.

Zwischen den Knicklinien 36 sind die Kunststoffgitter 14 und die Meltblownlage 16 nicht miteinander verbunden und können sich weiterhin relativ zueinander ausrichten. Mechanische Spannungen in der geprägten und verschweißten Filtermediumbahn 12 können so beim späteren Faltprozess einfacher abgebaut werden, so dass eine unerwünschte Faltenbildung zwischen den Knicklinien 36 vermieden wird und der Faltprozess einfacher und präziser vonstatten geht. Außerdem wird so vermieden, dass die Kunststoffgitter 14 und die Meltblownlage 16 beim Faltprozess voneinander abgehoben und getrennt werden. Die Verwendung einer einzigen Sonotrode 32 trägt dabei zur Vermeidung von mechanischen Spannungen und Falten in der Filtermediumbahn 12 bei.

In Förderrichtung 20 hinter der Ultraschall-Prägeeinheit 24 wird die geprägte und verschweißte Filtermediumbahn 12 über eine Umlenkrolle 38 und eine Umlenkrolle 40 bei Raumtemperatur einer Aufstelleinheit 42 zugeführt. In der Aufstelleinheit 42 wird die Filtermediumbahn 12 in hier nicht weiter interessierender Weise zickzackförmig gefaltet und zu den Filterelementen 13 geschnitten.

Die Filterelemente 13 werden anschließend einer hier nicht weiter interessierenden Faltenspitzenheizung 44 zugeführt und erhitzt.

Mit der Vorrichtung 10 können Faltgeschwindigkeiten von 700 Falten pro Minute und mehr erreicht werden.

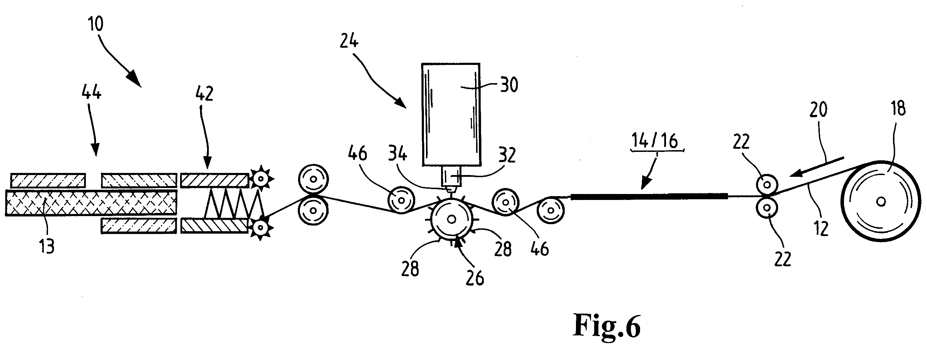

In der Figur 6 sind diejenigen Elemente, die zu denen der ersten, in den Figuren 1 bis 5 beschriebenen Vorrichtungen ähnlich sind, mit denselben Bezugszeichen versehen, so dass bezüglich deren Beschreibung auf die dort gemachten Ausführungen Bezug genommen wird. Die in Figur 6 dargestellte Vorrichtung unterscheidet sich dadurch, dass in Förderrichtung 20 vor und hinter der Ambosswalze 26 zusätzlich jeweils eine drehend angetriebene Nippwalze 46 angeordnet ist, die dem Transport der Filtermediumbahn 12 dienen. Auf die Umlenkrollen 38 und 40 wird hier verzichtet. Außerdem befindet sich beim zweiten Ausführungsbeispiel die Ultraschalleinheit 30 mit der Sonotrode 32 oberhalb der Ambosswalze 26.

Die Nippwalzen 46 sind in ihrer vertikalen Position relativ zur Ambosswalze 26 einstellbar, so dass mit ihnen ein Einlaufwinkel und ein Auslaufwinkel über die Ambosswalze 26 eingestellt werden kann. Die Positionen und die Geschwindigkeiten der Nippwalzen 46 werden abhängig von den Eigenschaften der Filtermediumbahn 12 so eingestellt, dass eine optimale Prägung, Verschweißung und Faltung erfolgt. Für einige Medien können auch nicht angetriebene Nippwalzen vorteilhaft sein.

Bei allen oben beschriebenen Vorrichtungen 10 und Ausführungsbeispielen eines Verfahrens zur Herstellung eines zickzackförmig gefalteten Filterelements 13 sind unter anderem folgende Modifikationen möglich:

Die Vorrichtung 10 und das Verfahren sind nicht beschränkt auf die Herstellung von zickzackförmig gefalteten Filtermediumbahnen 12 für Filterelemente 13 im Kraftfahrzeugbereich. Vielmehr können sie auch in anderen technischen Bereichen, beispielsweise in der Industrie bei Filtern für Industriemotoren oder Kompressoren oder in der Wassertechnik, verwendet werden.

Anstelle der dreischichtigen Filtermediumbahn 12 kann auch eine Filtermediumbahn mit mehr oder weniger als drei Schichten mit der Vorrichtung 10 gemäß dem Verfahren geprägt, verschweißt und gefaltet werden. Beispielsweise kann auch ein Verbund aus zwei Gitterlagen und zwei Meltblownlagen verwendet werden.

Anstelle der Filtermediumbahn 12 mit zwei Kunststoffgittern 14 und einer Meltblownlage 16 können auch andersartige mehrschichtige Filtermediumbahnen, beispielsweise aus Zellulosemedien mit auflaminiertem Meltblown, Vlies mit auflaminierten Gittern, Glasfasermedien, beispielsweise kaschiertem Glasfasermedium mit Gitter, oder Luftfiltervlies, mit der Vorrichtung 10 geprägt, verschweißt und gefaltet werden.

Es können auch Filtermediumbahnen, welche in einem vorherigen Arbeitsgang miteinander verbunden werden, mit der Ultraschall-Prägeeinheit 24 entlang der Knicklinien 36 geprägt und stabil verschweißt werden. Beispielsweise können in einem solchen vorigen Arbeitsgang bei einer Filtermediumbahn aus fünf Einzellagen die beiden Meltblownlagen beispielsweise mittels Polyurethan (PUR)-Schmelzklebstoff im Sprühauftrag auflaminiert werden. Anschließend können die beiden Kunststoffgitter beispielsweise ebenfalls mittels PUR-Schmelzkleber auf die laminierten Meltblownlagen laminiert werden.

Die Filtermediumbahn 12 kann auch beispielsweise mittels einer Einlaufheizung erhitzt werden, beispielsweise zur Laminierung der einzelnen Schichten, bevor sie der Ultraschall-Prägeeinheit 24 zugeführt wird.

Die Ausdehnung der Prägestege 28 in Umfangsrichtung der Ambosswalze 26 kann auch größer oder kleiner als 1 mm sein.

Die radial äußeren Oberflächen der Prägestege 28 können statt glatt auch strukturiert sein.

Bei der zweiten Variante der Vorrichtung 10 können anstelle der angetriebenen Nippwalzen 46 auch nicht angetriebene Nippwalzen vorgesehen sein. Es kann auch nur eine der beiden Nippwalzen 46 angetrieben sein.

**Patentansprüche**

1. Verfahren zur Herstellung eines zickzackförmig gefalteten Filterelements (13), insbesondere eines Kraftfahrzeugs aus einem bahnförmigen Filtermedium (12), bei dem das bahnförmige Filtermedium (12) über eine Zuführeinrichtung (18, 22) einer energieeintragenden Ultraschall-Prägeeinheit (24) zugeführt wird mit der Knicklinien (36) in das bahnförmige Filtermedium (12) geprägt werden und das Filtermedium (12) anschließend entlang der Knicklinien (36) mittels einer Falteinrichtung (42) gefaltet wird und wobei eine der Schichten des mehrschichtigen Filtermediums (12) ein Kunststoffgitter (14) aufweist und eine andere der Schichten eine Meltblownlage (16), die Schichten (14, 16) des mehrschichtigen Filtermediums (12) vor dem Prägen nicht miteinander verbunden sind und beim Prägen entlang der Knicklinien (36) derart ohne vorher erwärmt zu werden verschweißt werden, wobei die Verbundfestigkeit an den Verbindungs- bzw. Schweißlinien der Schichten mindestens so groß ist wie die Materialfestigkeit innerhalb der einzelnen Schichten, wobei das Filtermedium (12) mittels einer Ambosswalze (26) mit Prägestegen (28), einer ultraschallbetriebenen Sonotrode (32) und einem Prägestempel, der insbesondere von der Sonotrode (32) zumindest mit gebildet ist, geprägt und verschweißt wird, **dadurch gekennzeichnet, dass** zwischen den Knicklinien (36) das Kunststoffgitter (14) und die Meltblownlage (16) nicht miteinander verbunden werden.

**2.** Verfahren nach Anspruch 1, **dadurch gekennzeichnet, dass** der energieeintragenden Prägeeinheit (24) eine Aufstelleinheit (42) nachgeordnet ist zur zickzackförmigen Faltung des bahnförmigen Filtermediums (12).

**3.** Verfahren nach Anspruch 1, **dadurch gekennzeichnet, dass** in Transportrichtung (20) des Filtermediums (12) vor und hinter der Ambosswalze (26) jeweils eine, insbesondere angetriebene, Nippwalze (46) angeordnet ist.

**Claims**

**1.** Method for manufacturing a zigzag-folded filter element (13), in particular of a motor vehicle, made from a web-shaped filter medium (12), in which the web-shaped filter medium (12) is fed via a feeding device (18, 22) to an energy-introducing ultrasonic embossing unit (24) with which bending lines (36) are embossed into the web-shaped filter medium (12) and the filter medium (12) is then folded along the bending lines (36) by means of a folding device (42), and wherein one of the layers of the multilayer filter medium (12) features a synthetic grid (14) and another of the layers a meltblown layer (16), the layers (14, 16) of the multilayer filter medium (12) are not bonded to each other prior to embossing and are welded along the bending lines (36) during embossing without being heated beforehand, wherein the bond strength at the bonding or welding lines of the layers is at least as great as the material strength of the individual layers, wherein the filter medium (12) is embossed and welded by means of an anvil roll (26) with embossing webs (28), an ultrasonic-driven sonotrode (32) and an embossing die, which in particular is at least partly formed by the sonotrode (32), **characterized in that** between the bending lines (36) the synthetic grid (14) and the meltblown layer (16) are not connected to one another.

**2.** Method according to claim 1, **characterized in that** an erection unit (42) is arranged downstream of the energy-introducing embossing unit (24) for zigzag folding of the web-shaped filter medium (12).

**3.** Method according to claim 1, **characterized in that** in the transport direction (20) of the filter medium (12) an in particular driven nipping roller (46) each is disposed in front of and behind the anvil roll (26).

**Revendications**

**1.** Procédé de fabrication d'un élément filtrant (13) plié en accordéon, notamment d'un véhicule automobile, à partir d'un milieu filtrant (12) en forme de bande, dans lequel le milieu filtrant (12) en forme de bande est amené par l'intermédiaire d'un dispositif d'amené (18, 22) vers une unité d'estampage à ultrasons (24) apportant de l'énergie, avec laquelle des lignes de pliage (36) sont estampées dans le milieu filtrant (12) en forme de bande et le milieu filtrant (12) est ensuite plié le long des lignes de pliage (36) au moyen d'un dispositif de pliage (42), et une des couches du milieu filtrant multicouche (12) présentant une grille en matière plastique (14) et une autre des couches une couche fondue-soufflée (16), les couches (14, 16) du milieu filtrant multicouche (12) n'étant pas collées les unes aux autres avant l'estampage et étant soudées le long des lignes de pliage (36) pendant l'estampage sans être chauffées au préalable, la force de liaison au niveau des lignes de liaison ou de soudage des couches étant au moins aussi grande que la résistance des matériaux des différentes couches, le milieu filtrant (12) étant gaufré et soudé au moyen d'un contre-cylindre (26) avec des nervures de gaufrage (28), d'une sonotrode (32) actionnée par ultrasons et d'un poinçon d'estampage, qui est notamment formé au moins partiellement par la sonotrode (32), **caractérisé en ce que la** grille en matière plastique (14) et la couche fondue-soufflée (16) ne sont pas reliées l'une à l'autre entre les lignes de pliage (36).

**2.** Procédé selon la revendication 1, **caractérisé en ce qu'**une unité d'érection (42) est disposée en aval de l'unité d'estampage (24) apportant de l'énergie pour le pliage en accordéon du milieu filtrant (12) en forme de bande.

**3.** Procédé selon la revendication 1, **caractérisé en ce que** dans la direction de transport (20) du milieu filtrant (12), un rouleau de pincement (46), notamment entraîné, est disposé devant et derrière le contre-cylindre (26).

Fig.1

**Fig.2**

**Fig.3**

13

36

36

**Fig.4**

13

36

36

**Fig.5**

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9817573 A
- US 5089202 A
- WO 9817573 A1
- US 6932850 B1
- EP 0382330 A1
- DE 19825636 A1
- EP 0692294 A1